Europäisches Patentamt

**European Patent Office**

Office européen des brevets

(19)

(11) Veröffentlichungsnummer: **0 023 638**
**B1**

## (12) EUROPÄISCHE PATENTSCHRIFT

(45) Veröffentlichungstag der Patentschrift:
07.07.82

(21) Anmeldenummer: **80104191.4**

(22) Anmeldetag: **17.07.80**

(51) Int. Cl.³: **C 09 B 67/02, C 09 K 3/22**

(54) **Staubfreie Farbstoffe oder Farbstoffzubereitungen.**

(30) Priorität: 04.08.79 DE 2931771

(43) Veröffentlichungstag der Anmeldung:
11.02.81 Patentblatt 81/6

(45) Bekanntmachung des Hinweises auf die Patenterteilung:
07.07.82 Patentblatt 82/27

(84) Benannte Vertragsstaaten:
CH DE FR GB IT LI

(56) Entgegenhaltungen:
CH-A-575 455
CH-A-611 924
DEA-2-161 177
DE-A-2 507 188
DE-A-2 656 408
DE-C-274 642

(73) Patentinhaber: **BASF Aktiengesellschaft,
Carl-Bosch-Strasse 38, D-6700 Ludwigshafen (DE)**

(72) Erfinder: **Scherer, Hans, Dr., Suedtiroler Ring 25,
D-6719 Weisenheim (DE)**
Erfinder: **Daubach, Ewald, Dr.,
Thomas-Mann-Strasse 52, D-6700 Ludwigshafen (DE)**
Erfinder: **Tobias, Wolfram, Dr., Rieslingweg 6,
D-6706 Wachenheim (DE)**
Erfinder: **Schneider, Joachim U., Dr., Plauserstrasse 1,
D-6719 Weisenheim (DE)**

Staubfreie Farbstoffe oder Farbstoffzubereitungen

Die Erfindung betrifft staubfreie Farbstoffe oder Farbstoffzubereitungen.

Pulverförmige Farbstoffe und Farbstoffzubereitungen werden in grösserem Umfang verwendet, z.B. zur Herstellung von Färbeflotten zum Einfärben von Textilgut und Fasermaterial, zur Herstellung von Druckpasten und Druckfarben für den Druck auf Textilmaterial, Papier und Kunststoffen und zur Massefärbung von Kunststoffen.

Viele pulverförmige Farbstoffe und Farbstoffzubereitungen neigen bei der Verarbeitung mehr oder minder stark zum Stauben. Dieses Stauben ist sowohl beim Hersteller als auch beim Verarbeiter unerwünscht, da es zu Verlusten an Farbstoff, zur Verschmutzung der Arbeitsplätze und gegebenenfalls zur Gefährdung der Beschäftigten führt.

Wegen der grossen anwendungstechnischen Bedeutung wird das Problem der Entstaubung von Farbstoffen und/oder Farbstoffzubereitungen oder die direkte Herstellung von staubfreien oder staubarmen Farbstoffen oder Farbstoffzubereitungen schon seit längerer Zeit bearbeitet.

An die zur Entstaubung verwendeten Mittel werden hohe Anforderungen gestellt. Die Mittel dürfen die Qualität der Farbstoffe oder der Zubereitungen nicht verschlechtern. Die entstaubten Farbstoffe und Zubereitungen dürfen nicht klumpen, müssen rieselfähig bleiben und dürfen bei der Herstellung von Färbebädern oder Druckpasten keine Abscheidungen geben.

Weiterhin müssen die entstaubten Pulver gut benetzbar sein. Wichtig ist ausserdem, dass die Staubfreiheit oder Staubarmut auch über einen längeren Zeitraum erhalten bleibt.

Es ist bereits bekannt, dass durch Zusatz kleiner Mengen von Mono- oder Polyalkoholen, von Estern mit mehr als 6 C-Atomen, insbesondere von Estern aromatischer Carbonsäuren, von höhersiedenden Äthern, von Äthylenoxidaddukten, Silikonöl, $C_{10}$- bis $C_{20}$-Alkylbenzol wie Dodecylbenzol, langkettigen Kohlenwasserstoffen wie Octadecen, Trioctylamin sowie von Mischungen aus Emulgatoren und Mineralöl das Stauben vermindert werden kann (DE-B-565 895; DE-B-11 17 582 und 25 23 096; GB-A-695 372 und 713 541; US-A-2 604 469 und 3 560 134).

Die als Stand der Technik bekannten entstaubten Farbstoffe und Zubereitungen erfüllen nicht alle Forderungen, die an pulverförmige Farbstoffe hinsichtlich einer einwandfreien Verarbeitung und einer dauerhaften Staubfreiheit oder Staubarmut gestellt werden.

Als staubfrei werden pulverförmige Farbstoffe und Zubereitungen bezeichnet, die im Cassella Staubmessgerät (Textilveredelung 9 (1974), Nr. 3, Seiten 97/106) einen Staubwert von < 10 geben. Staubarme Farbstoffe und Zubereitungen liefern Staubwerte von 10 bis 15.

Als dauerhaft staubfrei bzw. staubarm werden solche Farbstoffe und Zubereitungen bezeichnet, deren Staubwert auch nach mindestens 12-monatiger Lagerung nach der Herstellung nicht grösser als 10, bzw. 10 bis 15 ist. In der Praxis hat sich gezeigt, dass Präparate, die nach einer Lagerung von 3 Tagen bei 60°C einen Staubwert kleiner als 10, bzw. 10 bis 15 zeigen, dauerhaft staubfrei bzw. dauerhaft staubarm sind.

Die Messmethode des Cassella Staubmessgerätes beruht darauf, dass eine Probe des zu messenden Pulvers aus einer festgelegten Höhe im freien Fall in den Messraum eingeworfen wird, in welchem die Staubentwicklung der Substanz stattfindet. Der Messraum wird von einem Lichtstrahl durchquert, dessen Intensität mit einer lichtelektrischen Zelle gemessen wird. Die Abnahme der Intensität des Lichtstrahls auf der Messzelle ist ein Mass für die Staubentwicklung der eingeworfenen Pulverprobe. Stark staubende Substanzen liefern Staubwerte von etwa 100 bis 150.

Aufgabe der vorliegenden Erfindung war es, staubfreie Farbstoffe oder Farbstoffzubereitungen aufzufinden, die den entstaubten Farbstoffen und Farbstoffzubereitungen des Standes der Technik überlegen sind und die gleichzeitig nicht deren nachteilige Wirkungen aufweisen.

Es wurde gefunden, dass staubfreie Farbstoffe oder Farbstoffzubereitungen aus Farbstoffen oder Farbstoffzubereitungen und einem Staubbindemittel aus Mineralöl und einem nichtionogenen Emulgator vorliegen, wenn diese als staubbindendes Mittel ein Gemisch aus

a) Mineralöl mit einem Siedebereich von 310 bis oberhalb 365°C,

b) mindestens ein nichtionogenes oberflächenaktives Mittel, dessen HLB-Wert zwischen 10 und 20 liegt, oder mindestens ein anionisches oberflächenaktives Mittel
und

c) mindestens ein nichtionisches oberflächenaktives Mittel mit HLB-Werten $\leq 8$ oder mindestens eine bei 20°C in Wasser nicht lösliche bis teilweise lösliche Verbindung, die polare, hydrophile Gruppen enthält, und das Verhältnis a : (b + c) zwischen 70 : 30 und 95 : 5 und das Verhältnis b : c zwischen 95 : 5 und 5 : 95 Gewichtsteilen liegt, enthalten.

Die staubfreien Farbstoffe oder Farbstoffzubereitungen der vorliegenden Erfindung enthalten 0,1 bis 5 Gew.-%, bezogen auf den Farbstoff/Farbstoffzubereitung, an dem Gemisch, deren Staubfreiheit über lange Zeit erhalten bleibt. Die staubfreien Farbstoffe und Zubereitungen sind rieselfähig und neigen nicht zur Bildung von Klumpen oder Schmieren, auch dann nicht, wenn sie bei der Herstellung der Färbebäder oder Druckpasten mit Wasser oder Lösungsmitteln in Berührung kommen. Die staubfreien Farbstoffe und Farbstoffzubereitungen sind in Wasser sehr gut benetzbar und geben beim Färben keine Abscheidungen. Die Benetzbarkeit in Wasser ist wesentlich besser als die der nicht entstaubten Farbstoffe und Zubereitungen.

Ein weiterer Vorteil der neuen staubfreien Farbstoffe oder Zubereitungen liegt darin, dass man im Vergleich zum Stand der Technik, z.B. dem aus der US-A-3 560 134 bekannten, mit deutlich geringeren Mengen an Staubbindemittel auskommt oder bei Anwendung vergleichbarer Mengen die Entstaubungswirkung wesentlich grösser ist und diese über einen längeren Zeitraum praktisch unverändert erhalten bleibt. Die Emulgatoren enthaltenden Staubbindemittel des Standes der Technik zeigen bei der Anwendung auf pulverförmige Farbstoffe und Zubereitungen eine Wirkung, die im wesentlichen auch mit dem im Mittel enthaltenen Mineralöl allein erzielt werden kann.

Aus der DE-B-2 523 096 sind staubfreie oder staubarme Zubereitungen bekannt, die als Entstaubungsmittel ein Gemisch aus einem nichtionogenen Emulgator auf der Basis von Polyäthern und einem Mineralöl mit einem Siederbereich von 140 bis 310°C enthalten und bei dem das Verhältnis von Emulgator zu Öl zwischen 35 : 65 und 5 : 95 liegt.

Die erfindungsgemässen staubfreien Farbstoffe und Farbstoffzubereitungen sind den entstaubten Farbstoffen und Zubereitungen des Standes der Technik deutlich überlegen.

Die als Komponente (a) in den staubfreien Farbstoffen/Zubereitungen gemäss der Erfindung enthaltenden Mineralöle sind unverseifbare ölige Stoffe, die im Erdöl, im Stein- oder Braunkohlenteer oder ihren Destillationsprodukten oder in einzelnen Produkten bei der Holz- und Torfverkohlung vorkommen. Bevorzugt sind als (a) Destillationsprodukte des Erdöls. Die als (a) zu verwendenden Öle haben einen Siedebereich von 310°C bis oberhalb von 365°C.

Besonders bevorzugt sind als (a) Spindelöle, Paraffinöle nach DAB VII oder weniger hoch raffinierte Weissöle, welche Siedebereiche von 310 bis oberhalb 365°C aufweisen, da diese hochsiedenden Öle in den entstaubend wirkenden Mitteln gemäss der vorliegenden Erfindung hinsichtlich der Wirkung und der Dauer der Wirkung der Entstaubung den nach dem Stand der Technik verwendeten Komponenten besonders weit überlegen sind.

Als Komponente (b) kommen nichtionogene oberflächenaktive Mittel mit einem HLB-Wert zwischen 10 und 20 oder auch anionische oberflächenaktive Mittel in Betracht.

Für (b) kommen als nichtionogene oberflächenaktive Mittel z.B. in Betracht:

1. Äthoxylierungsprodukte von $C_7$- bis $C_{30}$-Alkanolen, von $C_7$- bis $C_{30}$-Alkylaminen, von $C_{12}$- bis $C_{30}$-Alkansäuren, deren Amiden und deren Hydroxy-$C_2$- oder -$C_3$-alkylamiden, von Fettsäuredi- und -monoglyceriden und von $C_4$- bis $C_{20}$-Alkylphenolen;

2. äthoxylierte $C_{12}$- bis $C_{20}$-Fettsäureester von Polyhydroxyverbindungen, wobei bei 1. und 2. das Verhältnis zu oxäthylierendes Produkt : Äthylenoxid 1 : 3 bis 1 : 30 betragen kann;

3. Umsetzungsprodukte von Diaminen oder Polyhydroxyverbindungen mit Propylenoxid und dann mit Äthylenoxid;

4. hochäthoxyliertes Ricinusöl.

Im einzelnen sind für (b) z.B. zu nennen:

1,0. Oxäthylierungsprodukte von $C_7$- bis $C_{30}$-Alkanolen:
$C_7H_{15}$-O-$(CH_2$-$CH_2O)_5H$; $C_{14}H_{29}$-O-$(CH_2CH_2O)_6H$;
$C_{14}H_{29}$-O$(CH_2$-$CH_2O)_{15}H$; $C_{15}H_{31}$-O-$(CH_2$-$CH_2O)_{10}H$;
$C_{15}H_{31}$-O-$(CH_2$-$CH_2O)_{24}H$; $C_{17}H_{35}$-O-$(CH_2$-$CH_2O)_6H$;
$C_{17}H_{35}$-O-$(CH_2$-$CH_2O)_{20}H$; $C_{18}H_{37}$-O-$(CH_2$-$CH_2O)_5H$;
$C_{18}H_{37}$-O-$(CH_2$-$CH_2O)_7H$; $C_{20}H_{41}$-O-$(CH_2$-$CH_2O)_{30}H$;

1,1. Oxäthylierungsprodukte von $C_{12}$- bis $C_{30}$-Alkansäuren und deren Amiden:
$C_{13}H_{27}$-COO-$(CH_2$-$CH_2O)_5H$;
$C_{15}H_{31}$-COO-$(CH_2$-$CH_2O)_{20}H$;
$C_{17}H_{35}$-COO-$(CH_2CH_2O)_6H$;
$C_{17}H_{33}$-COO-$(CH_2CH_2O)_{10}H$;
$C_{21}H_{43}$-COO-$(CH_2CH_2O)_{20}H$;
Ölsäureäthanolamid + 4 Mol ÄO;

Oxäthylierungsprodukte von Fettsäuremono- und diglyceriden:

Glycerinmonolaurat + 20 Mol ÄO,
Glycerinmonostearat + 30 Mol ÄO,
Glycerindioleat + 30 Mol ÄO,
Glycerinmonorizinoleat + 15 Mol ÄO;
1,2. Oxäthylierungsprodukte von $C_4$- bis $C_{20}$-Alkylphenolen:
p-Nonylphenol + 10 Mol ÄO; p-Nonylphneol + 30 Mol ÄO; p-Nonylphenol + 15 Mol ÄO; p-Dodecylphenol + 20 Mol ÄO; p-tert.Butylphenol + 10 Mol ÄO; 2,4,6-Triisopropylphenol + 15 Mol ÄO; p-Isooctylphenol + 20 Mol ÄO;

2. Äthoxylierungsprodukte von $C_{12}$- bis $C_{20}$-Fettsäureestern mit Polyhydroxyverbindungen: Sorbitanmonolaurat + 20 Mol ÄO, Sorbitanmonoostearat + 25 Mol ÄO; Sorbitanmonoleat + 30 Mol ÄO;

3. Polyoxypropylierungs-/Polyoxäthylierungsprodukte von Diaminen und Polyhydroxyverbindungen: Äthylendiamin umgesetzt mit Propylenoxid und anschliessend mit Äthylenoxid, wobei der Gehalt an ÄO-Gruppen $\geqq$ dem Gehalt an PO-Gruppen ist, z.B. Äthylendiamin + 116 Mol PO und dann + 490 Mol ÄO, Äthylendiamin + 42 Mol PO + 132 Mol ÄO, Äthylendiamin + 76 Mol PO + 240 Mol ÄO, Propylenglykol + 18 Mol PO + 82 Mol ÄO, Trimethylolpropan + 20 Mol PO + 80 Mol ÄO, Äthylendiamin + 79 Mol PO + 180 Mol ÄO;

4. hochoxäthyliertes Ricinusöl, das durch Umsetzen von Ricinusöl mit 40 bis 60 Mol ÄO je Äquivalent Hydroxylgruppe im Ricinusöl erhalten wird.

Als anionische oberflächenaktive Mittel kommen für (b) $C_{15}$- bis $C_{20}$-Fettsäuren, Schwefelsäurehalbester von $C_8$- bis $C_{20}$-Alkanolen, Phosphorsäureester von oxäthylierten $C_{12}$- bis $C_{20}$-Alkanolen, $C_{12}$ bis $C_{20}$-Alkansulfonsäuren und $C_4$- bis

$C_{20}$-Alkylbenzolsulfonsäuren in Form der wasserlöslichen Salze in Betracht. Schwefelsäurehalbester und die Sulfonate sind in der Regel allein nicht zum Emulgieren von Mineralöl geeignet, jedoch entfalten diese Verbindungen zusammen mit den als (c) zu verwendenden Komponenten eine beträchtliche emulgierende Wirkung.

Als geeignete anionische oberflächenaktive Mittel (b) kommen z.B. im einzelnen in Betracht: Laurin-, Myristin-, Palmitin-, Stearin- und Ölsäure; Schwefelsäurehalbester des Lauryl-, Myristyl-, Palmityl-, Stearyl- und Cetylalkohols; 4-Dodecylbenzolsulfonsäure, 4-Nonylbenzolsulfonsäure, 4-Hexadecylbenzolsulfonsäure, 4-Octadecylbenzolsulfonsäure; Mono- und Diester der ortho-Phosphorsäure mit oxäthylierten $C_{12}$- bis $C_{20}$-Alkanolen wie Laurylalkohol + 4 ÄO, Plamitylalkohol oder Stearylalkohol mit 3 bis 10 ÄO in Form der wasserlöslichen Salze, wie der Alkalimetallsalze oder der Ammoniumsalze.

Als (b) sind wegen der besonders guten entstaubenden Wirkung Äthoxylierungsprodukte von $C_7$- bis $C_{30}$-Alkanolen und des Ricinusöls mit HLB-Werten von 15 bis 19 bevorzugt.

Als Komponente (c) kommen nichtionische oberflächenaktive Mittel mit HLB-Werten $\leq 8$ oder polare hydrophile Gruppen enthaltende Verbindungen, die bei 20°C in Wasser nicht bis teilweise löslich sind, in Betracht. Als polare hydrophile Gruppen enthalten letztere Estergruppen und/oder vorzugsweise Hydroxylgruppen.

Für die nichtionischen oberflächenaktiven Mittel mit HLB-Werten $\leq 8$ kommen z.B. in Betracht:

1. Umsetzungsprodukte von $C_{12}$- bis $C_{20}$-Alkanolen, von $C_{12}$- bis $C_{20}$-Fettsäuren und Fettsäureamiden mit 1 bis 3 Mol Äthylenoxid;
2. $C_{12}$- bis $C_{20}$-Fettsäureester mit ein- oder mehrwertigen Alkoholen oder Polyhydroxyverbindungen;
3. Äthylenoxid-Propylenoxid-Blockcopolymere und Umsetzungsprodukte von Äthylenoxid und Propylenoxid mit Di- und Polyolen und Di- und Polyaminen, wobei der Anteil an ÄO-Gruppen kleiner ist als der an PO-Gruppen;
4. Citronensäuretriester von $C_8$- bis $C_{20}$-Alkanolen und Phosphorsäure-triester von $C_8$- bis $C_{20}$-Alkanolen.

Als nicht oder nur teilweise in Wasser lösliche Verbindungen, die polare, hydrophile Gruppen enthalten, sind gesättigte oder ungesättigte Alkohole mit 6 bis 20 C-Atomen, $C_6$- bis $C_{10}$-Cycloalkanole und phenylaliphatische Alkohole (= Phenylgruppen enthaltende Alkanole) zu nennen.

Im einzelnen sind für (c) z.B. zu nennen:

1. Oxäthylierungsprodukte von Alkanolen, Fettsäuren oder Fettsäureamiden: Stearylalkohol + 2 Mol ÄO; Oleylalkohol + 2 Mol ÄO; Palmitylalkohol + 2 Mol ÄO; Stearinsäureäthanolamid, Stearinsäure-N,N-bis-äthanolamid, Stearinsäure-β(β'-hydroxyäthoxy)-äthylamid;
2. Fettsäureester mit ein- oder mehrwertigen Alkoholen oder Polyhydroxyverbindungen: Isobutylmyristat, Isobutylpalmitat, Glycerin-mono- und -dioleat, Triglyceride von geradzahligen linearen Fettsäuren, Sorbitan-mono- und -dioleat, Sorbitantrioleat, Sorbitan-mono-palmitat;
3. Umsetzungsprodukte mit Propylenoxid und Äthylenoxid: Äthylendiamin + 45 bis 50 Mol PO und dann 15 bis 20 Mol ÄO; Äthylendiamin + 45 bis 50 Mol PO und dann 8 bis 10 Mol ÄO; Äthylendiamin + 80 bis 85 Mol PO und dann 25 bis 30 Mol ÄO; Äthylendiamin + 80 bis 85 Mol PO und dann 10 bis 15 Mol ÄO; Äthylendiamin + 110 bis 120 Mol PO und dann 35 bis 45 Mol ÄO; Äthylenglykol + 9 Mol ÄO und dann 25 bis 35 Mol PO; Äthylenglykol + 6 Mol ÄO und dann 45 bis 55 Mol PO; Propylenglykol + 55 Mol PO und dann 30 bis 35 Mol ÄO; Trimethylolpropan + 80 Mol PO und dann 20 Mol ÄO;
4. Citronensäuretriester: Tris-isononylester, Trisdecylester, Tris-tridecylester der Citronensäure, Phosphorsäure-tris-2-äthylhexylester;
5. polare, hydrophile Gruppen enthaltende Verbindungen: Hexanol, n- und i-Octanol, 2-Äthylhexanol, n- und i-Nonanol, 1-Decanol, Dodecanol, Laurylalkohol, Stearylalkohol, Oleylalkohol, Cetylalkohol, Cyclohexanol, Methylcyclohexanol, Benzylalkohol und 2-Phenyläthanol.

Da die Wirksamkeit der Komponenten (c) zusammen mit der Komponente (b) mit abnehmendem hydrophilen Anteil bei (a) zunimmt, sind für (c) die gesättigten und ungesättigten Alkohole mit 10 bis 20 C-Atomen, die äthoxylierten $C_{12}$- bis $C_{20}$-Fettsäureamide mit 1 bis 3 Mol ÄO je Mol Fettsäureamid oder Gemische davon bevorzugt.

Das Verhältnis der Komponenten (b) : (c) in den staubbindenden Mitteln wird so gewählt, dass beim Verdünnen des staubbindenden Mittels mit Wasser eine Emulsion entsteht.

Das Verhältnis von (b) : (c) kann entweder empirisch durch Reihenversuche bestimmt oder näherungsweise in bekannter Art aus dem für Mineralöl erforderlichen HLB-Wert und den Werten der Einzelkomponenten errechnet werden (s. «Emulsionen» in Ullmann, Encyclopädie der technischen Chemie, 4. Auflage, 1975, Band 10, Seite 449).

Bevorzugt sind staubbindende Mittel, die – bezogen auf (a + b + c) – aus 80 bis 90 Gew.% (a) und 20 bis 10 Gew.% (b + c) bestehen, da mit solchen Mitteln optimale Entstaubungseffekte erzielt werden können.

Die staubbindenden Mittel werden zweckmässigerweise dadurch hergestellt, dass man das Mineralöl (a), das Mittel (b) und das Mittel (c) gegebenenfalls unter Erwärmen (vorteilhafterweise bis zu 80°C) mischt bis eine homogene Mischung vorliegt.

Für den Fall, dass (b) ein anionisches oberflächenaktives Mittel ist, erhält man Emulsionen oder Suspensionen, da diese Mittel in (a) + (c) nicht löslich sind. Die anionischen oberflächenaktiven Mittel werden zweckmässigerweise in Form der konzentrierten wässrigen oder alkoholischen Lösungen der Mischung aus (a) und (c) zugegeben.

Im Falle der Verwendung von Seifen als (b), können bei der Entstaubung von alkalischen Zubereitungen auch die freien Fettsäuren zur Herstellung der staubbindenden Mittel verwendet werden.

Zur Herstellung der staubfreien Farbstoffe und Zubereitungen werden die staubbindenden Mittel in einer Menge von 0,1 bis 5, vorzugsweise von 0,5 bis 3 Gew.-%, bezogen auf das Farbstoffpulver aufgebracht und untergemischt. Das Aufbringen erfolgt vorteilhafterweise durch Aufdüsen auf den pulverförmigen Farbstoff oder auf die Zubereitung. Dabei wird man vorteilhafterweise das staubbindende Mittel vor dem Aufdüsen auf Temperaturen bis zu 80°C erwärmen.

Es ist jedoch auch möglich, die Entstaubung dadurch durchzuführen, dass das staubbindende Mittel dem feuchten Press- oder Knetgut zugegeben und homogen untergemischt und das Gut dann getrocknet und gemahlen wird.

Besonders vorteilhaft können staubfreie Farbstoffzubereitungen hergestellt werden, wobei die staubbindenden Mittel der feinteiligen wässrigen Farbstoffdispersion nach dem Mahlen zugegeben werden und die Farbstoffzubereitung durch Zerstäubungstrocknung isoliert wird. Die so erhaltenen Pulver fallen ohne weitere Behandlung staubfrei an.

Die staubfreien Farbstoffe können Pigmentfarbstoffe, vorzugsweise Dispersions- und Küpenfarbstoffe, oder diese Farbstoffe enthaltenden Zubereitungen sein.

Chemisch gesehen handelt es sich bei diesen Farbstoffen z.B. um Azofarbstoffe, Anthrachinonfarbstoffe, Chinophthalonfarbstoffe, Methinfarbstoffen, Azomethinfarbstoffen, um Farbstofe der Indigo- oder Thioindigoreihe, um höher kondensierte Systeme des Anthanthrons, des Violanthrons und Isoviolanthrons, um solche aus der Chinacridonreihe, der Phthalocyanine, der Perylen-3,4,9,10-tetracarbonsäurediimidreihe.

Die Farbstoffzubereitungen enthalten die Farbstoffe in feiner Verteilung zusammen mit Dispergier-, Stell- und Netzmitteln und dienen vor allem zur Herstellung für Färbeflotten und Druckpasten von Textilmaterialien, sowie zum Färben von wässrigen Kunststoffdispersionen.

Die neuen staubfreien Farbstoffe und Farbstoffzubereitungen werden durch die folgenden Beispiele weiter erläutert. Die im folgenden genannten Teile und Prozentangaben beziehen sich auf das Gewicht. Die Staubwerte wurden mit dem Cassella Staubmessgerät ermittelt. Die Staubwerte wurden an Proben gemessen, die vorher 3 Tage bei 60°C gelagert wurden.

Beispiel 1

α) 8 Teile eines Mineralöls (Siedebereich 315 bis oberhalb 365°C), 1 Teil des Umsetzungsproduktes von $C_{18}$-Fettalkohol mit 24 Mol ÄO (HLB-Wert ca. 17) und 1 Teil eines Gemisches aus Mono- und Diglyceriden der Ölsäure (HLB-Wert ca. 5) wurden unter Erwärmen auf 40°C gemischt.

β) 2,5 Teile des nach α) erhaltenen Staubbindemittels werden in 100 Teilen einer Farbstoffzubereitung homogen verteilt. Man erhält eine staubfreie Zubereitung, die einen Staubwert von 5 aufweist.

Verwendet man dagegen das in der DE-B-25 23 096, Beispiel 1 beschriebenen Mittel, so erhält man eine Zubereitung, die einen Staubwert von 20 aufweist.

Erfolgt die Entstaubung mit der gleichen Menge des in der US-A-3 560 134, Beispiel 1 angegebenen Staubbindemittel, so erhält man eine Zubereitung, die einen Staubwert von 30 aufweist.

γ) Die in β) verwendete Farbstoffzubereitung wurde durch Mahlen einer Mischung aus 42 Teilen C.I. Vat Blue 4; C.I. Nr. 69 800, 48 Teilen des Kondensationsproduktes aus Formaldehyd und β-Naphthalinsulfonsäure (Na-Salz) und 10 Teilen Ligninsulfonat in einer Sandmühle in Form einer ca. 15 Gew.% Feststoff enthaltenden wässrigen Suspension (Mahlansatz), Trocknen des Mahlansatzes im Sprühturm und nachträgliches Mahlen erhalten. 90 Gew.% der Farbstoffteilchen sind kleiner als 10 μm.

Beispiel 2

Man versetzt 100 Teile der wässrigen Suspension (Mahlansatz) aus Beispiel 1γ), die 15 Gew.% Feststoff enthält, mit 0,15 Teilen des nach Beispiel 1α) erhaltenen Staubbindemittels. Nach anschliessender Zerstäubungstrocknung erhält man ein Färbepräparat, das einen Staubwert von 1 aufweist.

Verfährt man in analoger Weise, verwendet jedoch das in Beispiel 1 der DE-B-25 23 096 angegebene Entstaubungsmittel, so erhält man ein Präparat, das einen Staubwert von 79 hat.

Verwendet man das in Beispiel 4 der US-A-3 560 134 beschriebene Entstaubungsmittel, so erhält man ein Präparat, das einen Staubwert von 16 hat.

Beispiel 3

α) 8 Teile Mineralöl (Siedebereich von 315 bis oberhalb 365°C), 1 Teil eines Umsetzungsproduktes von $C_{18}$-Fettalkohol mit 30 Mol ÄO (HLB-Wert ca. 17) und 1 Teil 1-Decanol werden unter Erwärmen auf 40°C homogen gemischt.

β) 2,5 Teile des nach α) erhaltenen Staubbindemittels werden auf die nach Beispiel 1γ) hergestellte Farbstoffzubereitung aufgesprüht und homogen verteilt. Man erhält eine staubfreie Zubereitung, die einen Staubwert von 7 aufweist.

Beispiel 4

α) 8 Teile Mineralöl (Siedebereich von 315 bis oberhalb 365°C), 1 Teil eines Umsetzungsproduktes von 116 Mol Propylenoxid an 1 Mol Äthylendiamin, das dann mit 430 Mol ÄO umgesetzt wurde (HLB-Wert 22,5) und 1 Teil Sorbitantrioleat (HLB-Wert ca. 1,8) werden bei 45°C homogen gemischt.

β) Die Entstaubung erfolgt wie in Beispiel 2 angegeben unter Verwendung von 0,15 Teilen des in α) beschriebenen Staubbindemittels. Man er-

hält eine staubfreie Zubereitung, die einen Staubwert von 6 hat.

**Beispiel 5**

β) 100 Teile der unter γ) beschriebenen Zubereitung werden mit 0,5 Teile des in Beispiel 1α) beschriebenen Staubbindemittels, das vorher auf 60°C erwärmt wurde, innig gemischt. Die Zubereitung hat einen Staubwert von 2.

γ) Die Farbstoffzubereitung besteht aus einer Mischung von 40 Teilen des Kupplungsproduktes von 3-Amino-5-nitro-2,1-benzisothiazol auf N-(2'-Carbomethoxyäthyl)-N-äthylanilin, 30 Teilen eines Dispergiermittels, das durch Kondensation von m-Kresol, Formaldehyd und Natriumsulfit erhalten wird, und 30 Teilen Ligninsulfonat. Die Zubereitung wurde durch Mahlen der Mischung in Form der wässrigen Suspension und Trocknen des Mahlansatzes im Sprühturm erhalten.

**Beispiel 6**

α) 80 Teile Mineralöl (Siedebereich 315 bis oberhalb 365°C), 16 Teile eines Umsetzungsproduktes von Äthylendiamin mit 47 Mol PO, das dann mit 8 Mol ÄO umgesetzt worden ist, und 8 Teile einer 50%igen wässrigen Lösung von Dodecylbenzolsulfonsäure (Natriumsalz) werden homogenisiert, wobei eine Emulsion entsteht.

β) Auf 100 Teile der im Beispiel 5γ) beschriebenen Farbstoffzubereitung wird 1 Teil des unter α) beschriebenen Staubbindemittels aufgedüst und die Mischung innig gemischt. Man erhält eine staubfreie Zubereitung, deren Staubwert 1 beträgt.

**Beispiel 7**

80 Teile Mineralöl (Siedebereich 315 bis oberhalb 365°C), 15,4 Teile Ölsäureäthanolamid (HLB-Wert ca. 8) und 4,6 Teile eines Umsetzungsproduktes von $C_{16/18}$-Fettalkoholgemisch mit ca. 24 Mol ÄO je Äquivalent Hydroxylgruppe (HLB-Wert ca. 17) werden bei 50°C homogen gemischt.

Bei Anwendung auf die in Beispiel 1γ) beschriebenen Farbstoffzubereitung erhält man eine Präparation mit einem Staubwert von 10.

**Beispiel 8**

α) 80 Teile Mineralöl (Siedebereich 315 bis oberhalb 365°C), 10 Teile eines Umsetzungsproduktes von $C_{16/18}$-Fettalkoholgemischs mit 24 Mol ÄO (HLB-Wert ca. 17) und 10 Teile 1-Decanol werden homogen gemischt.

β) Mit der in Beispiel 1γ) beschriebenen Farbstoffzubereitung und 2,5 Gew.% des unter α) beschriebenen Staubbindemittels erhält man eine Präparation, die einen Staubwert von 7 aufweist.

**Beispiel 9**

α) 80 Teile Mineralöl (Siedebereich 315 bis oberhalb 365°C), 12,2 g eines Gemisches von Glycerinmono- und dioleat (HLB-Wert ca. 2,8) und 7,8 g des Umsetzungsproduktes von Äthylendiamin mit 116 Mol Propylenoxid und 430 Mol ÄO (HLB-Wert ca. 22) werden bei 50°C homogen gemischt.

β) In die in Beispiel 1γ) angegebene Farbstoffzubereitung werden – bezogen auf die Zubereitung – 2,5 Gew.% des unter α) beschriebenen Staubbindemittels eingearbeitet. Man erhält eine Präparation, die einen Staubwert von 8 aufweist.

**Beispiel 10**

α) 80 Teile Mineralöl (Siedebereich 315 bis oberhalb 365°C), 10,8 Teile eines Umsetzungsproduktes von $C_{16/18}$-Fettalkoholen mit 24 Mol ÄO (HLB-Wert ca. 17) und 9,2 Teile eines Gemisches von Glycerinmono- und -dioleat (HLB-Wert ca. 2,8) werden homogen gemischt (50°C).

β) Verteilt man 3,0 Gew.% des Mittels (bezogen auf die Zubereitung) in der in Beispiel 1γ) angegebenen Zubereitung, so erhält man eine Präparation, die einen Staubwert von 9 aufweist.

**Beispiel 11**

80 Teile Mineralöl (Siedebereich 315 bis oberhalb 365°C), 11,4 Teile des Umsetzungsproduktes von $C_{16/18}$-Fettalkoholen mit 24 Mol ÄO (HLB-Wert ca. 17) und 8,6 Teile Sorbitantrioleat (HLB-Wert ca. 1,8) werden bei 50°C gemischt.

Mit 2,5 Gew.%, bezogen auf die Zubereitung, erhält man mit der in Beispiel 5γ) beschriebenen Zubereitung eine Präparation mit einem Staubwert von 9.

**Beispiel 12**

80 Teile Mineralöl (Siedebereich 315 bis oberhalb 365°C), 8,6 Teile des Umsetzungsproduktes von 116 Mol PO an 1 Mol Äthylendiamin, dann oxäthyliert mit 490 Mol ÄO und 11,4 Teile Sorbitantrioleat werden bei 50°C homogen gemischt.

Bei Anwendung von 2,5 Gew.% – bezogen auf die Zubereitung – erhält man mit der in Beispiel 5γ) beschriebenen Zubereitung eine Präparation mit einem Staubwert von 6.

**Patentansprüche**

1. Staubfreie Farbstoffe oder Farbstoffzubereitungen aus Farbstoffen oder Farbstoffzubereitungen und einem Staubbindemittel aus Mineralöl und einem nichtionischen Emulgator, dadurch gekennzeichnet, dass die Farbstoffe oder Farbstoffzubereitungen als staubbindendes Mittel ein Gemisch aus

a) Mineralöl mit einem Siedebereich von 310 bis oberhalb 365°C,

b) mindestens ein nichtionigenes oberflächenaktives Mittel, dessen HLB-Wert zwischen 10 und 20 liegt, oder mindestens ein anionisches oberflächenaktives Mittel
und

c) mindestens ein nichtionisches oberflächenaktives Mittel, mit HLB-Werten $\leq 8$ oder mindestens eine bei 20°C in Wasser nicht lösliche bis teilweise lösliche Verbindung, die polare, hydrophile Gruppen enthält,

wobei das Verhältnis a : (b + c) zwischen 70 : 30 und 95 : 5, und das Verhältnis b : c zwischen 95 : 5 und 5 : 95 Gewichtsteilen liegt, enthalten.

2. Staubfreie Farbstoffe oder Farbstoffzubereitungen gemäss Anspruch 1, dadurch gekennzeichnet, dass diese als (b) Äthoxylierungsprodukte von $C_7$- bis $C_{30}$-Alkanolen oder des Ricinusöls mit HLB-Werten von 15 bis 19 enthalten.

3. Staubfreie Farbstoffe oder Farbstoffzubereitungen gemäss Anspruch 1 oder 2, dadurch gekennzeichnet, dass diese als (c) gesättigte oder ungesättigte Alkohole mit 10 bis 20 C-Atomen, äthoxylierte $C_{12}$- bis $C_{20}$-Fettsäureamide mit 1 bis 3 Mol ÄO je Mol oder Gemische davon enthalten.

4. Staubfreie Farbstoffe oder Farbstoffzubereitungen gemäss Anspruch 1 bis 3, dadurch gekennzeichnet, dass diese – bezogen auf (a + b + c) – 80 bis 90 Gew.-% (a) und 20 bis 10 Gew.-% (b + c) enthalten.

5. Staubfreie Farbstoffe oder Farbstoffzubereitungen gemäss Anspruch 1 bis 4, dadurch gekennzeichnet, dass diese – bezogen auf den Farbstoff bzw. auf die Zubereitung – 0,1 bis 5 Gew.-% staubbindende Mittel aus (a + b + c) enthalten.

6. Staubfreie Farbstoffe oder Farbstoffzubereitungen gemäss den Ansprüchen 1 bis 4, dadurch gekennzeichnet, dass diese – bezogen auf den Farbstoff bzw. auf die Zubereitung – 0,5 bis 3 Gew.-% staubbindende Mittel aus (a + b + c) enthalten.

**Claims**

1. Dustless dyes or dye formulations consisting of dyes or formulations and a dustproofing agent comprising mineral oil and a non-ionic emulsifier, characterized in that the dyes or dye formulations contain, as dustproofing agent, a mixture of

a) mineral oil boiling at from 310 to above 365°C,

b) at least one non-ionic surfactant having an HLB of from 10 to 20, or at least one anionic surfactant and

c) at least one non-ionic surfactant having an HLB of $\leqq$ 8, or at least one compound which is insoluble or partially soluble in water at 20°C and carries polar, hydrophilic groups, the ratio a:(b+c) being from 70:30 to 95:5 and the ratio b:c being from 95:5 to 5:95, these ratios being by weight.

2. Dustless dyes or dye formulations as claimed in claim 1, characterized in that they contain as (b) an oxyethylation product of a $C_7$–$C_{30}$-alkanol or of castor oil, having an HLB of from 15 to 19.

3. Dustless dyes or dye formulations as claimed in claim 1 or 2, characterized in that they contain as (c) a saturated or unsaturated alcohol of 10 to 20 carbon atoms or a $C_{12}$–$C_{20}$-fatty acid amide which has been oxyethylated with from 1 to 3 moles of ethylene oxide, or a mixture thereof.

4. Dustless dyes or dye formulations as claimed in claims 1 to 3, characterized in that they contain from 80 to 90% by weight of (a) and from 20 to 10% by weight of (b + c), the percentages being based on (a + b + c).

5. Dustless dyes or dye formulations as claimed in claims 1 to 4, characterized in that they contain from 0.1 to 5% by weight, based on the dye or dye formulation, of dustproofing agent consisting of (a + b + c).

6. Dustless dyes or dye formulations as claimed in claims 1 to 4, characterized in that they contain from 0.5 to 3% by weight, based on the dye or dye formulation, of dustproofing agent consisting of (a + b + c).

**Revendications**

1. Colorants et préparations de colorants exempts de poussière, se composant de colorants ou de préparations de colorants et d'un agent fixant la poussière obtenu à partir d'une huile minérale et d'un émulsionnant non ionique, caractérisés en ce que les colorants ou préparations de colorants contiennent, en tant qu'agent fixant la poussière, un mélange

a) d'une huile minérale dont la gamme d'ébullition est comprise entre 310 et plus de 365°C,

b) d'au moins un agent tensio-actif non ionogène dont l'indice HLB se situe entre 10 et 20, ou d'au moins un agent tensio-actif anionique, et

c) d'au moins un agent tensio-actif non ionique, dont l'indice HLB est inférieur ou égal à 8, ou d'au moins un composé qui contient des groupes polaires hydrophiles et dont la solubilité dans l'eau à 20°C est nulle à partielle, le rapport a : (b + c) se situant entre 70 : 30 et 95 : 5 et le rapport b : c entre 95 : 5 et 5 :95 parties en poids.

2. Colorants ou préparations de colorants exempts de poussière selon la revendication 1, caractérisés en ce qu'ils contiennent, en tant que constituant (b), des produits d'éthoxylation d'alcanols en $C_7$ à $C_{30}$ ou de l'huile de ricin, ayant des indices HLB de 15 à 19.

3. Colorants ou préparations de colorants exempts de poussière selon la revendication 1 ou 2, caractérisés en ce qu'ils contiennent, en tant que constituant (c), des alcools saturés ou insaturés à 10–20 atomes de C, des amides éthoxylées d'acides gras en $C_{12}$ à $C_{20}$ avec 1 à 3 mol d'oxyde d'éthylène par mol ou des mélanges de ces composés.

4. Colorants ou préparations de colorants exempts de poussière selon l'une quelconque des revendications 1 à 3, caractérisés en ce qu'ils contiennent – par rapport à (a + b + c) – 80 à 90% en poids de (a) et 20 à 10% en poids de (b + c).

5. Colorants ou préparations de colorants exempts de poussière selon l'une quelconque des revendications 1 à 4, caractérisés en ce qu'ils contiennent – par rapport au colorant ou à la préparation de colorant – 0,1 à 5% en poids d'agent fixant la poussière, composé de (a + b + c).

6. Colorants ou préparations de colorants exempts de poussière selon l'une quelconque des revendications 1 à 4, caractérisés en ce qu'ils contiennent – par rapport au colorant ou à la préparation de colorant – 0,5 à 3% en poids d'agent fixant la poussière, composé de (a + b + c).